# EUROPÄISCHE PATENTSCHRIFT

(11) **EP 2 066 911 B1**
(45) Veröffentlichungstag und Bekanntmachung des Hinweises auf die Patenterteilung: **16.04.2014**
(21) Anmeldenummer: 07818268.0
(22) Anmeldetag: 20.09.2007
(51) Int. Cl.: F16D 13/64, F16D 13/72

(54) **REIBTEIL FÜR EINE REIBSCHLÜSSIG ARBEITENDE EINRICHTUNG UND REIBSCHLÜSSIG ARBEITENDE EINRICHTUNG MIT EINEM SOLCHEN REIBTEIL**
FRICTION PART FOR A FRICTIONALLY ACTING DEVICE, AND FRICTIONALLY ACTING DEVICE HAVING A FRICTION PART OF SAID TYPE
ÉLÉMENT DE FRICTION POUR UN DISPOSITIF TRAVAILLANT PAR FRICTION ET DISPOSITIF TRAVAILLANT PAR FRICTION DOTÉ D'UN TEL ÉLÉMENT DE FRICTION

(30) Priorität: 26.09.2006 DE 102006045456
(43) Veröffentlichungstag der Anmeldung: 10.06.2009
(73) Patentinhaber: BorgWarner, Inc., Auburn Hills, MI 48326-2872 (US)
(72) Erfinder: FABRICIUS, Emilio, Luciano, Giuseppe, 68723 Oftersheim (DE); CONTRINO, Salvatore, 68219 Mannheim (DE)
(74) Vertreter: Leckel, Ulf
(86) Internationale Anmeldenummer: PCT/EP2007/008176
(87) Internationale Veröffentlichungsnummer: WO 2008/037390

(56) Entgegenhaltungen:
- EP-A- 0 625 647
- EP-A- 0 848 177
- WO-A-2005/085667
- US-A1- 2005 284 721

## Beschreibung

Die vorliegende Erfindung betrifft ein Reibteil für eine reibschlüssig arbeitende Einrichtung mit einer ringförmigen Reibfläche, die einen Innenrand und einen Außenrand aufweist, wobei in der Reibfläche mindestens ein Nutensatz mit einer ersten Nut, die sich von dem Innenrand oder von dem Außenrand zu einem Verzweigungspunkt zwischen dem Innenrand und dem Außenrand erstreckt, und einer zweiten und dritten Nut, die sich jeweils von dem Verzweigungspunkt zu dem anderen Rand erstrecken, vorgesehen ist. Die vorliegende Erfindung betrifft ferner eine Kupplung für ein Kraftfahrzeug mit einem solchen Reibteil.

Aus dem Stand der Technik sind eine Vielzahl von Reibteilen für reibschlüssig arbeitende Einrichtungen, wie beispielsweise Lamellen für Lamellenkupplungen oder Lamellenbremsen oder Synchronringe für Synchronisierungseinrichtungen, bekannt, bei denen das Reibteil eine Reibfläche aufweist, in der Nuten vorgesehen sind, die ein Nutmuster ausbilden.

So beschreibt die EP 1 371 866 A1 eine Lamelle für eine nasslaufende Mehrscheibenlamellenkupplung mit einer ringförmigen Reibfläche. Die Reibfläche weist eine innere Begrenzungskante und eine äußere Begrenzungskante auf. In der Reibfläche ist mindestens eine Nut vorgesehen, die von der inneren Begrenzungskante zu der äußeren Begrenzungskante verläuft. Die Nut ist dabei in einen ersten Teilabschnitt, der ausgehend von der inneren Begrenzungskante zu einem Umlenkpunkt zwischen den Begrenzungskanten verläuft, und einen zweiten Teilabschnitt unterteilt, der ausgehend von dem Umlenkpunkt zu der äußeren Begrenzungskante verläuft, wobei der zweite Teilabschnitt in einem vorbestimmten Winkel gegenüber dem ersten Teilabschnitt abgeknickt ist. Im Betrieb kommt es an diesem Umlenkpunkt zu einer punktuellen Druckerhöhung in dem durchströmenden Kühlmittel, wie beispielsweise Öl, wodurch benachbarte Lamellen der Mehrscheibenlamellenkupplung auseinandergedrückt werden. Dies hat wiederum zur Folge, dass die außer Reibeingriff gebrachte Mehrscheibenlamellenkupplung ein reduziertes Schleppmoment hat.

Die US 5,460,255 beschreibt eine nasslaufende Reibkupplung, die eine oder mehrere Reibscheiben umfasst, auf deren Seiten ringförmige Reibflächen vorgesehen sind. Die Reibflächen werden von der Oberfläche eines Reibbelags gebildet, nämlich einem Papierreibbelag. Der Reibbelag ist dabei in mehrere Reibbelagsegmente unterteilt, die auf der Reibscheibe angeordnet bzw. befestigt sind, wobei zwischen den Reibbelagsegmenten Nuten verbleiben, die sich von einem Innenrand der Reibfläche zu einem Außenrand der Reibfläche erstrecken. Die einzelnen Reibbelagsegmente wurden zuvor von einem kontinuierlichen Streifen des Reibbelags geschnitten, so dass wenig Reibbelagabfall entstanden ist. In einer speziellen Ausführungsform der Reibscheibe kommen ausschließlich dreieckige Reibbelagsegmente zum Einsatz. Diese sind derart angeordnet, dass sich in Umfangsrichtung der Reibfläche stets eine Nut, die gegenüber einer Radialen nach vorne geneigt ist, mit einer Nut abwechselt, die gegenüber der Radialen nach hinten geneigt ist.

Ein weiteres lamellenartig ausgebildetes Reibteil für ein automatisches Getriebe o. ä. ist aus der DE 43 02 773 A1 bekannt. Das hierin offenbarte Reibteil umfasst eine ringscheibenförmige Halteplatte an der eine ringförmige Reibfläche vorgesehen ist, die von einem Innenrand einerseits und einem Außenrand andererseits begrenzt ist. In der Reibfläche sind mehrere Nutensätze vorgesehen, die jeweils eine erste Nut, die sich von dem Innenrand zu dem Außenrand erstreckt, und eine zweite Nut umfassen, die sich von einer zwischen dem Innenrand und dem Außenrand liegenden Stelle auf der ersten Nut zu dem Außenrand erstreckt. Beide Nuten sind im Hinblick auf die vorgegebene Drehrichtung des Reibteils zur Radialen schräg nach hinten geneigt, wobei die zweite Nut eine stärkere Neigung aufweist. Die derart ausgebildeten Nutensätze sollen zu einer schnellen Entfernung des Ölfilms zwischen dem Reibteil und dem zugehörigen Gegenstück im Falle der Betätigung der Kupplung führen, um schon früh einen hohen Reibungskoeffizienten zu erzielen.

Der zuvor beschriebene Stand der Technik ist mit unterschiedlichen Nachteilen behaftet. So ist zunächst die Geschwindigkeit der Ölfilmentfernung verbesserungswürdig, um möglichst früh einen vollständigen Kraftschluss zwischen dem Reibteil und dessen Gegenstück zu erzielen. Darüber hinaus gewährleistet das bekannte Nutbild keine ausreichende Kühlung des Reibbelages bzw. der Reibfläche durch das durch die Nuten strömende Öl. Des Weiteren kann der hohe Druck des Öles dazu führen, dass der Reibbelag beschädigt wird, insbesondere wenn es sich um einen auf der Reibscheibe aufgebrachten Papierreibbelag handelt. Ein weiterer Nachteil des bekannten Reibteils besteht darin, dass das so genannte Schleppmoment durch das bekannte Nutmuster nicht so stark reduziert bzw. eliminiert ist. Es ist ferner zu erwähnen, dass der Einbau der bekannten Reibscheibe in eine Kupplung stets mit großer Aufmerksamkeit durchzuführen ist, da die Ausrichtung der Nuten zu der Drehrichtung stimmen muss, wodurch die Fertigung einer Kupplung aus den bekannten Reibscheiben erschwert ist.

Aus der US 2005/0284721 A1 ist ein Nutensatz in der Reibfläche eines Reibteils bekannt, der eine erste, zweite und dritte Nut aufweist, wobei sich die erste Nut ausgehend vom Außenrand der Reibfläche zu einem Verzweigungspunkt erstreckt, während sich die zweite und dritte Nut von dem Verzweigungspunkt zu dem Innenrand erstrecken. Die Größe der Nutquerschnitte verändert sich entlang der Nuten, wobei der kleinste Nutquerschnitt der ersten Nut kleiner als der größte Nutquerschnitt der zweiten und dritten Nut ausgebildet ist.

Auch bei dem vorangehend beschriebenen Reibteil besteht der Nachteil, dass das so genannte Schleppmoment durch die Ausbildung des Nutensatzes nicht so stark reduziert ist, wie dies wünschenswert wäre.

Es ist daher eine Aufgabe der vorliegenden Erfindung, ein Reibteil für eine reibschlüssig arbeitende Einrichtung zu schaffen, das eine schnelle Ölfilmentfernung von der Reibfläche im Falle der Betätigung, eine effiziente Kühlung der Reibfläche und eine einfache Montage der Reibteils gewährleistet, wobei ferner ein geringes Schleppmoment und eine sichere Funktion des aufgebrachten Reibbelages - sofern vorhanden - sichergestellt sein soll. Der vorliegenden Erfindung liegt ferner die Aufgabe zugrunde, eine reibschlüssig arbeitende Einrichtung für ein Kraftfahrzeug mit einem solchen vorteilhaften Reibteil zu schaffen, das ein ruckfreies bzw. harmonisches Schließen der Einrichtung unabhängig von Ölvolumen, Druck und Temperatur ermöglicht.

Diese Aufgabe wird durch die in den Patentansprüchen 1 bzw. 29 angegebenen Merkmale gelöst. Vorteilhafte Ausführungsformen der Erfindung sind Gegenstand der Unteransprüche.

Das erfindungsgemäße Reibteil für eine reibschlüssig arbeitende Einrichtung weist eine ringförmige Reibfläche auf. Die Reibfläche umfasst einen Innenrand und einen Außenrand, wobei in der Reibfläche mindestens ein Nutensatz mit einer ersten, zweiten und dritten Nut vorgesehen ist. Die erste Nut erstreckt sich von dem Innenrand oder dem Außenrand zu einem Verzweigungspunkt zwischen dem Innenrand und dem Außenrand. Im zweitgenannten Fall findet das Reibteil vorzugsweise in einer reibschlüssig arbeitenden Einrichtung Anwendung, in der das Kühlmittel innerhalb der Einrichtung von außen nach innen durch die Nuten gezwungen wird. Die zweite wie auch die dritte Nut erstreckt sich von dem Verzweigungspunkt zu dem anderen Rand, also dem Außenrand oder Innenrand. Erfindungsgemäß ist die zweite Nut in die eine Umfangsrichtung und die dritte Nut in die andere Umfangsrichtung der Reibfläche gegenüber einer Radialen durch den Verzweigungspunkt geneigt. Das erfindungsgemäße Reibteil hat zunächst den Vorteil, dass die Montage desselben vereinfacht ist, da die zweite Nut in die eine Umfangsrichtung und die dritte Nut in die andere Umfangsrichtung geneigt ist, wodurch das Reibteil weitgehend drehrichtungsneutral ist und somit in beliebiger Orientierung in die Kupplung eingebaut werden kann. Bei einem Reibteil mit einem derart geformten Nutensatz entsteht während des Betriebes im Bereich des Verzweigungspunktes ein erhöhter Druck in dem Kühlmittel der reibschlüssig arbeitenden Einrichtung, wie beispielsweise Öl, der dazu führt, dass benachbarte Reibpartner auseinandergedrückt werden. Hierdurch ist das so genannte Schleppmoment reduziert. Des Weiteren erweist sich die der zweiten und dritten Nut vorgelagerte erste Nut als eine Art Druckbegrenzer, der den Druck an dem Verzweigungspunkt in einem Maße reduziert, dass die Reibbeläge, insbesondere wenn es sich um Papierreibbeläge handelt, nicht beschädigt werden oder das Öl nicht wieder auf die Reibfläche zwischen den Reibpartnern gedrückt wird. Darüber hinaus führt der Nutensatz des erfindungsgemäßen Reibteils zu einer schnellen Abführung des Ölfilmes von der Reibfläche sowie einer effektiven Kühlung derselben. Es hat sich ferner gezeigt, dass der Einsatz des erfindungsgemäßen Reibteils in einer Kupplung o. ä. zu einer Kupplung führt, die unabhängig von Ölvolumen, Druck und Temperatur ein ruckfreies bzw. harmonisches Schließen ermöglicht. Erfindungsgemäß ist der kleinste Nutquerschnitt der ersten Nut größer als der größte Nutquerschnitt der zweiten Nut und größer als der größte Nutquerschnitt der dritten Nut. Die derart größer ausgebildete erste Nut verhindert insbesondere Turbulenzen innerhalb des Nutensatzes, die zu einem Strömungsabriss führen können. Auch wird bei einem ausschließlich Y-förmigen Nutensatz eine besonders effektive Temperaturverringerung aufgrund einer langsameren Strömung innerhalb des Nutensatzes und einer somit verbesserten Wärmeaufnahme erzielt.

In einer bevorzugten Ausführungsform des erfindungsgemäßen Reibteils erstreckt sich die erste Nut von dem Innenrand zu dem Verzweigungspunkt. Dies macht die erfindungsgemäßen Reibteile für den Einsatz in einer reibschlüssig arbeitenden Einrichtung vorteilhaft, bei denen das Kühlmittel, wie beispielsweise Öl, von innen radial nach außen durch die Nuten getrieben wird.

In einer weiteren bevorzugten Ausführungsform des erfindungsgemäßen Reibteils ist der Nutensatz Y-förmig ausgebildet. Der Nutensatz gemäß dieser Ausführungsform des Reibteils betrifft demzufolge keine erste Nut, die in eine Ringnut mündet, da die o. g. Vorteile, wie insbesondere die effektive Kühlung und die schnelle Ölfilmbeseitigung, nicht in dem Maße erzielt werden könnten.

In einer weiteren bevorzugten Ausführungsform des erfindungsgemäßen Reibteils weist der Y-förmige Nutensatz lediglich drei randseitige Öffnungen auf. Unter randseitigen Öffnungen sind hierbei die Öffnungen der ersten, zweiten und dritten Nut am Innen- oder Außenrand der Reibfläche zu verstehen.

Gemäß einer besonders bevorzugten Ausführungsform des erfindungsgemäßen Reibteils ist der Nutensatz ausschließlich Y-förmig ausgebildet. Hierdurch wird ein besonders vorteilhaftes Strömungsverhalten innerhalb des Nutensatzes und somit eine gute Regelbarkeit der reibschlüssig arbeitenden Einrichtung mit einem solchen Reibteil erzielt.

Um einen ausschließlich Y-förmigen Nutensatz zu erhalten, besteht der Nutensatz in einer weiteren bevorzugten Ausführungsform des erfindungsgemäßen Reibteils ausschließlich aus der ersten, zweiten und dritten Nut.

Um ferner einen ausschließlich Y-förmigen Nutensatz zu erhalten, sind die erste, zweite und dritte Nut in dem Verzweigungspunkt endend zusammengeführt. Dies bedeutet, dass sich keine der ersten, zweiten und dritten Nut über den Verzweigungspunkt hinaus erstreckt, was der Schaffung einer weiteren Nut entspräche und somit eine Abweichung von dem ausschließlich Y-förmigen Nutensatz bedeuten würde.

Um die eingangs erwähnte Drehrichtungsunabhängigkeit weitgehend zu verwirklichen, erstreckt sich die erste Nut in einer weiteren bevorzugten Ausführungsform des erfindungsgemäßen Reibteils entlang der Radialen, die sich durch den Verzweigungspunkt erstreckt. Dabei ist die erste Nut vorzugsweise geradlinig ausgebildet.

Um eine besonders schnelle Abfuhr des Ölfilms von der Reibfläche und eine effektive Kühlung derselben zu verwirklichen, ist in einer weiteren besonders bevorzugten Ausführungsform des erfindungsgemäßen Reibteils zwischen der zweiten und dritten Nut ein Verzweigungswinkel kleiner als 180° ausgebildet. Unter dem Verzweigungswinkel ist hierbei derjenige Winkel zwischen der zweiten und dritten Nut zu verstehen, der zwischen den der ersten Nut abgewandten Seiten der zweiten und dritten Nut ausgebildet ist.

Als ein Reibteil mit besonders guter Kühlung der Reibfläche und schneller Abfuhr des Ölfilmes hat sich eine weitere bevorzugte Ausführungsform der Erfindung erwiesen, bei der der Verzweigungswinkel zwischen 76° und 86°, vorzugsweise 81°, beträgt.

In einer vorteilhaften Ausführungsform des erfindungsgemäßen Reibteils entspricht der Neigungswinkel der zweiten Nut gegenüber der Radialen, die sich durch den Verzweigungspunkt erstreckt, dem Neigungswinkel der dritten Nut gegenüber dieser Radialen. Durch dieses weitere Merkmal wird eine annähernd vollständige Drehrichtungsneutralität des Reibteils erreicht, was die Montage des Reibteils innerhalb der Einrichtung erheblich erleichtert.

Gemäß einer weiteren vorteilhaften Ausführungsform des erfindungsgemäßen Reibteils weist die zweite Nut und die dritte Nut jeweils eine Austrittsöffnung auf, die sich je nach Orientierung des Nutensatzes an dem Außenrand oder Innenrand befindet.

In einer bevorzugten Ausführungsform des erfindungsgemäßen Reibteils ist die eine Austrittsöffnung in der einen Umfangsrichtung und die andere Austrittsöffnung in der anderen Umfangsrichtung vor der Radialen, die sich durch den Verzweigungspunkt erstreckt, angeordnet. Hierdurch ist unter anderem eine annähernde Drehrichtungsneutralität des Reibteils gewährleistet.

In einer weiteren vorteilhaften Ausführungsform des erfindungsgemäßen Reibteils weist die erste Nut eine Eintrittsöffnung auf, die sich je nach Orientierung des Nutensatzes an dem Innenrand oder Außenrand befindet. Durch die Eintrittsöffnung kann das Kühlmittel beim Betrieb des Reibteils in die erste Nut eintreten.

Um den bereits erwähnten Druck im Bereich des verzweigungspunktes zu erzielen, der letztlich zu einer Reduzierung des Schleppmomentes führt, ist erfindungsgemäß der kleinste Nutquerschnitt der ersten Nut auch größer als der kleinste Nutquerschnitt der zweiten Nut und größer als der kleinste Nutquerschnitt der dritten Nut. Der Nutquerschnitt bezeichnet hierbei die Querschnittsfläche, wobei der Nutquerschnitt in einer Ebene quer zur Erstreckungsrichtung der jeweiligen Nut verläuft.

In einer weiteren vorteilhaften Ausführungsform des erfindungsgemäßen Reibteils ist der Nutquerschnitt der zweiten und dritten Nut in Richtung der jeweiligen Austrittsöffnung konstant. Bei dieser Ausführungsform wird an den Austrittsöffnungen genannten Nuten ein geringerer Unterdruck erzeugt, als dies bei der nachstehend genannten Ausführungsform der Fall ist. Ein solches Reibteil kann daher besonders vorteilhaft in einer reibschlüssig arbeitenden Einrichtung eingesetzt werden, bei der wenig Öl verwendet wird.

Um ein Reibteil zu erhalten, bei dem die erfindungsgemäßen Vorteile besonders ausgeprägt sind, ist in einer weiteren bevorzugten Ausführungsform der Erfindung der Nutquerschnitt der zweiten und dritten Nut in Richtung der jeweiligen Austrittsöffnung vergrößert. Hierdurch wird eine Diffusorwirkung innerhalb der zweiten und dritten Nut erzeugt, die einen erhöhten Staudruck am Verzweigungspunkt, eine schnelle Abfuhr des Ölfilms von der Reibfläche und eine gute Kühlung des Reibteils bewirkt.

Die vorgenannten Vorteile sind in einer weiteren bevorzugten Ausführungsform des erfindungsgemäßen Reibteils noch deutlicher ausgeprägt, bei der der Nutquerschnitt der zweiten und dritten Nut kontinuierlich, also nicht unstetig, vergrößert ist.

Um nun die Diffusorwirkung eines sich in Richtung der Austrittsöffnung vergrößernden Nutquerschnitts besonders vorteilhaft einzusetzen, ist der Nutquerschnitt der zweiten und dritten Nut in einer besonders bevorzugten Ausführungsform des erfindungsgemäßen Reibteils an der jeweiligen Austrittsöffnung am größten.

In einer weiteren vorteilhaften Ausführungsform des erfindungsgemäßen Reibteils ist eine Veränderung des Nutquerschnitts der Nuten in Erstreckungsrichtung ausschließlich durch eine Veränderung der Nutbreite in Erstreckungsrichtung bewirkt. Dies ist aus Herstellungsgesichtspunkten von Vorteil, zumal es sich gezeigt hat, dass die Nutbreite im Gegensatz zu der Nuttiefe einfacher überwachbar bzw. überprüfbar ist.

In einer weiteren besonders bevorzugten Ausführungsform des erfindungsgemäßen Reibteils ist der Nutensatz bezogen auf die Radiale symmetrisch ausgebildet. Auf diese Weise wird eine vollständige Drehrichtungsunabhängigkeit des Reibteils erzielt, wodurch einerseits die Montage vereinfacht und andererseits auch der Einsatz in einer reibschlüssige arbeitenden Einrichtung möglich ist, bei der das Reibteil in beide Drehrichtungen drehbar sein soll.

Grundsätzlich kann die Reibfläche auch von der Oberfläche einer einstückigen Reibscheibe ausgebildet sein. In einer vorteilhaften Ausführungsform des erfindungsgemäßen Reibteils weist das Reibteil jedoch einen Belagträger und einen an dem Belagträger angeordneten Reibbelag zur Ausbildung der Reibfläche auf. Bei dem Reibbelag handelt es sich vorzugsweise um einen Papierreibbelag. Derartige Papierreibbeläge bestehen beispielsweise aus Holz- oder Baumwollfasern, Carbon- und Glasfasern, die durch Kunstharz, wie z. B. Epoxid oder Phenol, miteinander verbunden sind. Auf Grund der unabhängigen Fertigung des Reibbelages von dem Reibbelagträger und der späteren Zusammenführung, wird eine wesentlich flexiblere Herstellung der Reibteile ermöglicht.

In einer weiteren bevorzugten Ausführungsform des erfindungsgemäßen Reibteils umfasst der Reibbelag mehrere Reibbelagsegmente, die derart an dem Reibbelagträger angeordnet sind, dass die Nuten zwischen den Reibbelagsegmenten ausgebildet sind. Auf diese Weise wird bei der Herstellung des Reibbelages weniger Material verbraucht, was insbesondere bei teuren Papierreibbelägen zu hohen Kostenersparnissen führt. So wird lediglich dort Reibbelagmaterial verwendet, wo tatsächlich Reibfläche ausgebildet sein soll, wohingegen im Bereich der Nuten, deren Grund nunmehr von dem Reibbelagträger gebildet ist, auf Reibbelagmaterial verzichtet wird. Letzteres ist bei Reibbelägen, in die die Nuten eingeprägt sind, nicht der Fall. Auch führt das Einprägen der Nuten zu einer erhöhten Dicke des Reibbelages im Randbereich der Nut, was die Regelbarkeit einer reibschlüssig arbeitenden Einrichtung mit einem solchen Reibbelag erschweren würde. Bei einem Reibbelag aus Reibbelagsegmenten hingegen ist eine engere Dickenstreuung gegeben, die zu einer besseren Regelbarkeit der reibschlüssig arbeitenden Einrichtung führt. Auch kann es beim Einprägen der Nuten dazu kommen, dass die erste Nut gar nicht erzeugt wird, wenn der Innenrand des Reibbelages zu stark nach außen versetzt ist. Diese Gefahr besteht bei der erfindungsgemäßen Ausführungsform nicht, so dass auch die Fertigung vereinfacht ist.

Um zu verhindern, dass der Reibbelag während des Betriebes beschädigt wird, beispielsweise auf Grund des hohen Drucks innerhalb der Nuten, sind in einer besonders bevorzugten Ausführungsform des erfindungsgemäßen Reibteils die dem Verzweigungspunkt zugewandten Ecken der Reibbelagsegmente abgerundet, zumal die nicht abgerundeten Ecken eine geringere mechanische Stabilität gegenüber den abgerundeten Ecken aufweisen.

Um den vorgenannten Vorteil auch im Bereich der Eintritts- und Austrittsöffnungen zu erhalten, sind die den Eintritts- und/oder Austrittsöffnungen zugewandten Ecken der Reibbelagsegmente in einer weiteren vorteilhaften Ausführungsform des erfindungsgemäßen Reibteils abgerundet.

Gemäß einer weiteren bevorzugten Ausführungsform des erfindungsgemäßen Reibteils ist das Reibteil eine Lamelle für eine Lamellenkupplung oder eine Lamellenbremse.

In einer weiteren besonders bevorzugten Ausführungsform des erfindungsgemäßen Reibteils ist in der Reibfläche ferner mindestens eine Sacknut vorgesehen, die sich von dem Innenrand oder dem Außenrand der Reibfläche zu einem Endpunkt zwischen dem Innenrand und dem Außenrand erstreckt. So kann im Betrieb beispielsweise im Bereich der an dem Außenrand vorgesehenen Sacknut ein Unterdruck entstehen, während an den Austrittsöffnungen des Nutensatzes ein Überdruck besteht. Auf diese Weise wird das Öl o. ä. aus dem Bereich der Austrittsöffnungen in den Bereich der Sacknut gesogen, wodurch eine besonders gute Kühlwirkung an dem Reibteil sowie eine verbesserte Regelbarkeit der reibschlüssig arbeitenden Einrichtung erzielt wird.

In einer weiteren vorteilhaften Ausführungsform des erfindungsgemäßen Reibteils weist die Sacknut eine randseitige Öffnung, also eine Öffnung an dem Außenrand oder dem Innenrand der Reibfläche, auf, die in der einen Umfangsrichtung unmittelbar benachbart zu der einen Austrittsöffnung und in der anderen Umfangsrichtung unmittelbar benachbart zu der anderen Austrittsöffnung angeordnet ist. Unter dem Terminus "unmittelbar" ist hierbei zu verstehen, dass in den beiden Umfangsrichtungen keine weiteren Nutenöffnungen o. ä. zwischen der randseitigen Öffnung der Sacknut und den Austrittsöffnungen in dem jeweiligen Rand der Reibfläche angeordnet sind.

Gemäß einer weiteren vorteilhaften Ausführungsform des erfindungsgemäßen Reibteils ist die Sacknut in Umfangsrichtung zwischen der zweiten und dritten Nut desselben Nutensatzes angeordnet.

Die erfindungsgemäße reibschlüssig arbeitende Einrichtung für ein Kraftfahrzeug, vorzugsweise eine Kupplung, eine Bremse oder eine Synchronisierungseinrichtung, weist mindestens ein Reibteil der erfindungsgemäßen Art auf. Bezüglich der Vorteile der Einrichtung sei auf die oben stehende Beschreibung des erfindungsgemäßen Reibteils verwiesen.

In einer bevorzugten Ausführungsform der erfindungsgemäßen reibschlüssig arbeitenden Einrichtung ist die Kupplung eine Nass- und/oder Lamellenkupplung oder die Bremse eine Lamellenbremse.

Die Erfindung wird im Folgenden anhand einer beispielhaften Ausführungsform unter Bezugnahme auf die beigefügten Zeichnungen näher erläutert. Es zeigen:
- Fig. 1: eine Vorderansicht einer Ausführungsform des erfindungsgemäßen Reibteils,
- Fig. 2: eine vergrößerte Darstellung des Ausschnitts A von Fig. 1,
- Fig. 3: einen Querschnitt entlang der Schnittlinie B-B von Fig. 2
- Fig. 4: einen Querschnitt entlang der Schnittlinie C-C von Fig. 2,
- Fig. 5: einen Querschnitt entlang der Schnittlinie D-D von Fig. 2,
- Fig. 6: eine Vorderansicht einer zweiten Ausführungsform des erfindungsgemäßen Reibteils und
- Fig. 7: eine vergrößerte Darstellung des Ausschnitts A von Fig. 6.

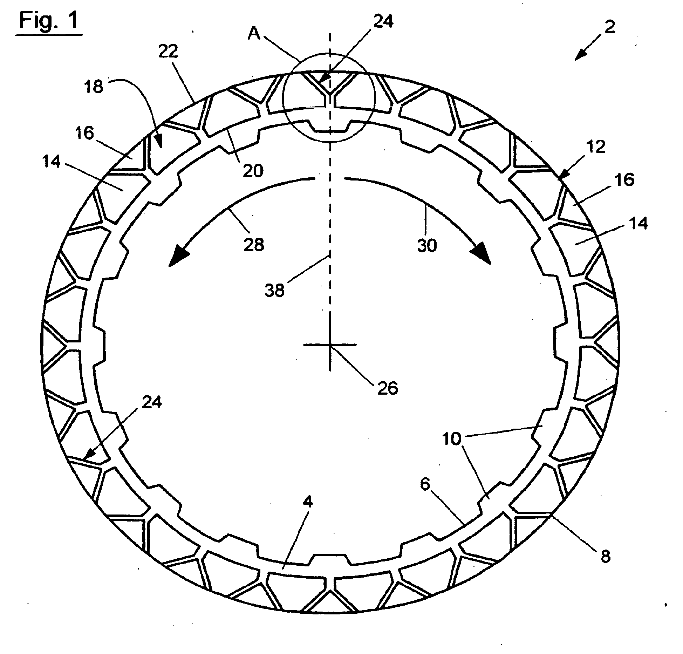

Fig. 1 zeigt eine erste Ausführungsform des erfindungsgemäßen Reibteils 2 für eine reibschlüssige arbeitende Einrichtung. Das gezeigte Reibteil 2 ist im vorliegenden Fall als eine Lamelle für eine Lamellenkupplung ausgebildet und weist zunächst einen Belagträger 4 auf. Der Belagträger 4 ist als eine stählerne Ringscheibe ausgebildet, die sich in der Zeichnungsebene erstreckt und einen inneren Rand 6 sowie einen äußeren Rand 8 umfasst. An dem inneren Rand 6 sind radial nach innen hervorstehende Zähne 10 vorgesehen, die einstückig mit der Ringscheibe ausgebildet und in Umfangsrichtung voneinander beabstandet angeordnet sind. Dank der Zähne 10 kann die Lamelle, bei der es sich folglich um eine so genannte Innenlamelle handelt, drehfest mit einer Welle der Kupplung verbunden werden. Es sei jedoch darauf hingewiesen, dass es sich bei dem erfindungsgemäßen Reibteil 2 ebenso um eine Außenlamelle handeln könnte, bei der die Zähne dann an dem äußeren Rand 8 angeordnet wären.

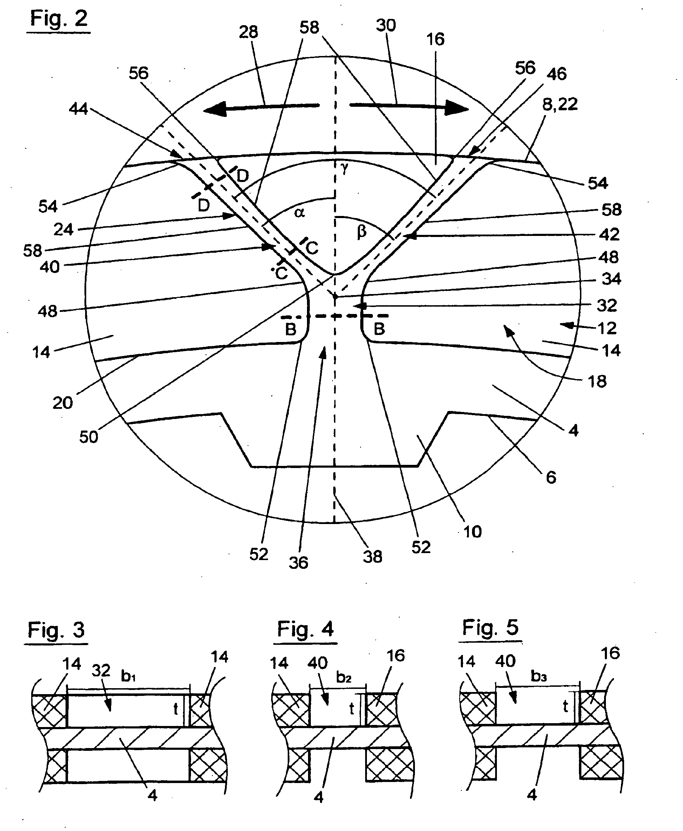

An der dem Betrachter zugewandten Vorderseite des Belagträgers 4 sowie an der dem Betrachter abgewandten Rückseite des Belagträgers 4 (Fig. 3 bis 5) ist jeweils ein Reibbelag 12 angeordnet, bei dem es sich in der dargestellten Ausführungsform um einen Papierreibbelag handelt. Der Reibbelag 12 setzt sich dabei aus mehreren Reibbelagsegmenten 14, 16 zusammen, die voneinander beabstandet an der Vorder- und Rückseite des Reibbelagträgers 4 angeordnet sind. Die dem Reibbelagträger 4 abgewandte Seite des Reibbelages 12 bzw. der einzelnen Reibbelagsegmente 14, 16 bilden die Reibfläche 18 aus. Die Reibbelagsegmente 14, 16 sind dabei derart angeordnet, dass eine im Wesentlichen ringförmige Reibfläche 18 ausgebildet ist. Die ringförmige Reibfläche 18 weist einen Innenrand 20, der in radialer Richtung weiter außen als der innere Rand 6 des Reibbelagträgers 4 angeordnet ist, und einen Außenrand 22 auf, der dem äußeren Rand 8 des Reibbelagträgers 4 entspricht, d. h. bei der dargestellten Ausführungsform reicht der Reibbelag 12 bis an den äußeren Rand 8 des Reibbelagträgers 4 heran.

Die Reibbelagsegmente 14, 16 sind derart an dem Reibbelagträger 4 angeordnet, dass zwischen den Reibbelagsegmenten 14, 16 bzw. zwischen den Kanten der Reibbelagsegmente 14, 16 eine Vielzahl von Nuten ausgebildet ist, die mindestens einen Y-förmigen Nutensatz 24 innerhalb der Reibfläche 18 ausbilden. Der besagte Y-förmige Nutensatz 24 wiederholt sich entlang der gesamten Reibfläche 18 regelmäßig und wird später eingehender unter Bezugnahme auf Fig. 2 beschrieben. Das Reibteil 2 kann im Einbauzustand um eine Drehachse 26 gedreht werden, die sich senkrecht zur Ebene des Reibteiles 2 und somit senkrecht zur Zeichnungsebene erstreckt. Dabei kann das Reibteil 2 sowohl in die eine Umfangsrichtung 28 der Reibfläche 18 als auch in die andere bzw. entgegengesetzte Umfangsrichtung 30 der Reibfläche 18 gedreht werden.

Nachstehend wird beispielhaft der Aufbau eines einzelnen Nutensatzes 24 stellvertretend für alle Nutensätze 24 in der Reibfläche 18 unter Bezugnahme auf Fig. 2 erläutert, die den Ausschnitt A von Fig. 1 vergrößert darstellt.

Der Nutensatz 24 weist zunächst eine erste Nut 32 auf, die sich ausgehend vom Innenrand 20 der Reibfläche 18 zu einem Verzweigungspunkt 34 erstreckt. Dabei bildet die erste Nut 32 an dem Innenrand 20 der Reibfläche 18 eine radial nach innen weisende Eintrittsöffnung 36 aus. Der Verzweigungspunkt 34 ist hingegen zwischen dem Innenrand 20 und dem Außenrand 22 der Reibfläche 18, also inmitten der Reibfläche 18, angeordnet. Durch den Verzweigungspunkt 34 erstreckt sich ferner eine von der Drehachse 26 (Fig. 1) ausgehende Radiale 38 nach außen, die in den Fig. 1 und 2 gestrichelt angedeutet ist. Die erste Nut 32 erstreckt sich zwischen der Eintrittsöffnung 36 und dem Verzweigungspunkt 34 geradlinig entlang dieser Radialen 38.

Der Nutensatz 24 weist ferner eine zweite Nut 40 und eine dritte Nut 42 auf. Sowohl die zweite als auch die dritte Nut 40, 42 erstrecken sich ausgehend von dem Verzweigungspunkt 34 zu dem anderen Rand, nämlich dem Außenrand 8, der Reibfläche 18, wo sie jeweils eine Austrittsöffnung 44, 46 ausbilden. Die zweite Nut 40 ist dabei um einen Neigungswinkel α in die eine Umfangsrichtung 28 der Reibfläche 18 gegenüber der Radialen 38 durch den Verzweigungspunkt 34 geneigt, während die dritte Nut 42 um einen Neigungswinkel β in die andere bzw. entgegengesetzte Umfangsrichtung 30 der Reibfläche 18 gegenüber der Radialen 38 durch den Verzweigungspunkt 34 geneigt ist. In der dargestellten Ausführungsform sind die Neigungswinkel α und β identisch bzw. gleich groß, wobei die Nuten 40, 42 - wie bereits erwähnt - lediglich in entgegengesetzte Richtungen gegenüber der Radialen 38 geneigt sind. Der Verlauf der zweiten und dritten Nut 40, 42 ist dabei derart gewählt, dass die eine Austrittsöffnung 44 in der einen Umfangsrichtung 28 und die andere Austrittsöffnung 46 in der anderen Umfangsrichtung 30 vor der Radialen 38 angeordnet ist. Beide Nuten 40, 42 haben einen im Wesentlichen geradlinigen Verlauf.

Zwischen der zweiten und dritten Nut 40, 42 ist auf der der ersten Nut 32 abgewandten Seite ferner ein Verzweigungswinkel γ ausgebildet, der letztlich der Summe aus den Neigungswinkeln α und β entspricht. Dieser Verzweigungswinkel γ beträgt in der dargestellten Ausführungsform 81°. Grundsätzlich sollte der Verzweigungswinkel γ kleiner als 180° sein und vorteilhafterweise zwischen 76° und 86° betragen.

Der Y-förmige Nutensatz 24 weist lediglich drei randseitige Öffnungen auf, nämlich die Eintrittsöffnung 36 an dem Innenrand 20 der Reibfläche 18 und die beiden Austrittsöffnungen 40, 42 am Außenrand 22 der Reibfläche 18. Bei der dargestellten Ausführungsform ist der Nutensatz 24 ausschließlich Y-förmig ausgebildet, was im vorliegenden Fall bedeutet, dass der Nutensatz 24 ausschließlich aus der ersten, zweiten und dritten Nut 32, 40, 42 besteht, die in dem Verzweigungspunkt 34 endend zusammengeführt sind.

Um eine Beschädigung der Reibbelagsegmente 14, 16 im Bereich des Verzweigungspunktes 34 während des Betriebes der reibschlüssig arbeitenden Einrichtung zu verhindern, sind die dem Verzweigungspunkt 34 zugewandten Ecken 48 der Reibbelagsegmente 14 und die dem Verzweigungspunkt 34 zugewandte Ecke 50 des Reibbelagsegmentes 16 abgerundet. Des Weiteren sind die der Eintrittsöffnung 36 zugewandten Ecken 52 der Reibbelagsegmente 14 abgerundet. Darüber hinaus sind weiterhin die den Austrittsöffnungen 44, 46 zugewandten Ecken 54 der Reibbelagsegmente 14 und die den Austrittsöffnungen 44, 46 zugewandten Ecken 56 des Reibbelagsegmentes 16 abgerundet.

Nachstehend wird der weitere Aufbau der einzelnen Nuten 32, 40, 42 des Nutensatzes 24 unter Bezugnahme auf die Fig. 2 bis 5 erläutert, wobei der Aufbau beider Nuten 40, 42 beispielhaft anhand der zweiten Nut 40 erläutert wird, da diese einen im Wesentlichen gleichen Aufbau haben, zumal der Nutensatz 24 bezogen auf die Radiale 38 durch den Verzweigungspunkt 34 symmetrisch ausgebildet ist. Würde die Radiale 38 als Achse angesehen, so kann auch von einer Achsensymmetrie gesprochen werden.

Der kleinste Nutquerschnitt der ersten Nut 32 ist größer als der kleinste Nutquerschnitt der zweiten bzw. dritten Nut 40 bzw. 42, wie dies aus einem Vergleich der Nutquerschnitte zwischen den Fig. 3 und 4 hervorgeht. Darüber hinaus ist der kleinste Nutquerschnitt der ersten Nut 32 größer als der größte Nutquerschnitt der zweiten Nut 40 und größer als der größte Nutquerschnitt der dritten Nut 42, was sich u. a. aus einem Vergleich zwischen dem kleinsten Nutquerschnitt der ersten Nut 32 in Fig. 3 mit dem Nutquerschnitt der zweiten bzw. dritten Nut 40, 42 im Bereich der Austrittsöffnung 44, 46 ergibt.

Der Nutquerschnitt der zweiten und dritten Nut 40, 42 vergrößert sich kontinuierlich in Richtung der Austrittsöffnungen 44, 46 am Außenrand 22 der Reibfläche 18, so dass der Nutquerschnitt am Außenrand 22 bzw. an den Austrittsöffnungen 44, 46 am größten ist. Diese kontinuierliche Vergrößerung wird beispielsweise dadurch erreicht, dass mindestens eine Kante 58 der Reibbelagsegmente 14, 16, die die seitliche Begrenzung der jeweiligen Nut 40, 42 bildet, in Richtung der jeweiligen Nut 40, 42 gewölbt ist. Im vorliegenden Beispiel handelt es sich jeweils um die Kante 58 des Reibbelagsegmentes 16. Neben der Tatsache, dass bei der gezeigten Ausführungsform sowohl Vorder- als auch Rückseite des Reibbelagträgers 4 mit einem Reibbelag 12 versehen sind, ist den Fig. 3 bis 5 weiterhin zu entnehmen, dass sich die Veränderung des Nutquerschnitts der Nuten 30, 40, 42 in Erstreckungsrichtung ausschließlich durch eine Veränderung der Nutbreite bₓ ergibt, wohingegen die Nuttiefe t durch die Stärke bzw. Dicke des Reibbelages 12 vorgegeben ist. Für die Fig. 3 bis 5 gilt b₁ > b₃ > b₂.

Nachstehend werden weitere Merkmale sowie die Funktionsweise des Reibteils 2 bei Einsatz in einer Ausführungsform einer Nasskupplung insbesondere unter Bezugnahme auf Fig. 2 beschrieben.

Beim Betrieb der Kupplung strömt ein Kühlmittel, wie beispielsweise Öl, durch die Eintrittsöffnung 36 in die erste Nut 32 in der Reibfläche 18 und gelangt bis zu dem Verzweigungspunkt 34. Von dort aus kann das Öl weiter durch die zweite und dritte Nut 40, 42 bis zu den Austrittsöffnungen 44, 46 strömen, wo es wieder aus dem Nutensatz 24 austritt.

Unter anderem dank der Vergrößerung des Nutquerschnitts der zweiten und dritten Nut 40, 42 in Richtung der Austrittsöffnungen 44, 46 wird eine Diffusorwirkung erzielt, die einen höheren Druck am Verzweigungspunkt 34 bewirkt. Ein solcher erhöhter Druck führt zu einer Reduzierung des so genannten Schleppmomentes bei nicht in Reibeingriff stehendem Reibteil. Dennoch wirkt das Vorhandensein der ersten Nut 32, die bis zu dem Verzweigungspunkt 34 führt, druckbegrenzend, so dass der angrenzende Reibbelag 12 nicht beschädigt wird. Weiterhin verhindern die abgerundeten Ecken 48, 50 der Reibbelagsegmente 14, 16 im Bereich des Verzweigungspunktes 34 eine Beschädigung des Reibbelages 12. Im betätigten Zustand der Kupplung bewirkt das Reibteil 2 mit dem Nutensatz 24 einen schnellen Abtransport des Ölfilmes zwischen den Reibpartnern sowie eine gute Kühlung des Reibbelages 12 bzw. der Reibfläche 18.

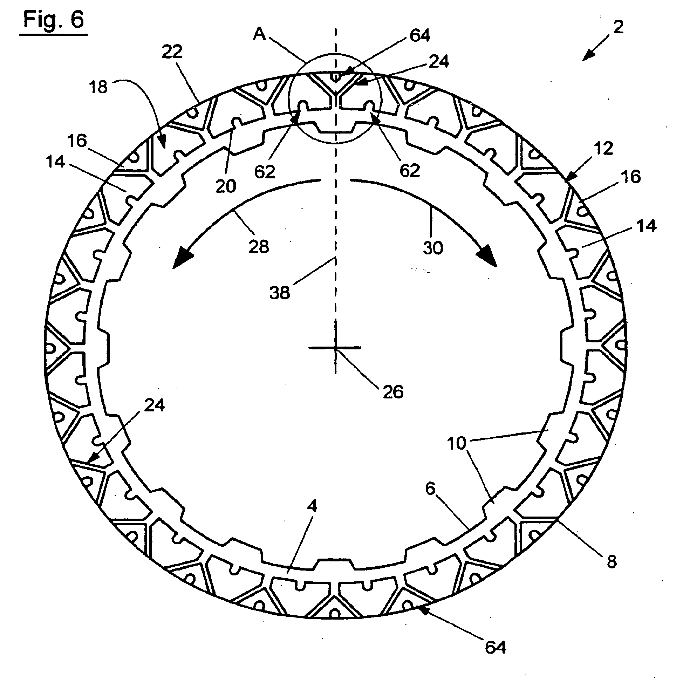

Fig. 6 zeigt eine zweite Ausführungsform des erfindungsgemäßen Reibteils 60 für eine reibschlüssige arbeitende Einrichtung. Das Reibteil 60 entspricht im Wesentlichen dem Reibteil 2 in der ersten Ausführungsform, so dass nachstehend lediglich die Unterschiede zu der ersten Ausführungsform erläutert werden. Für gleiche oder ähnliche Teile werden dieselben Bezugszeichen verwendet, so dass diesbezüglich die obige Beschreibung der ersten Ausführungsform entsprechend gilt.

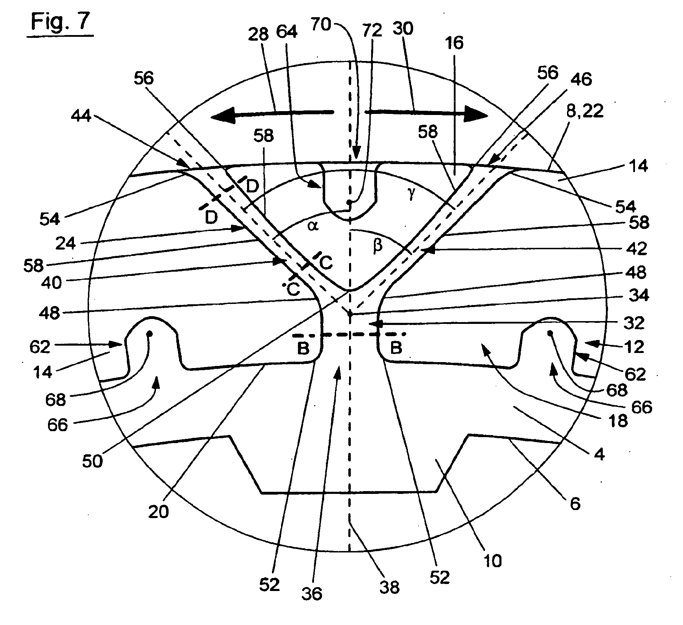

In der Reibfläche 18 des Reibteils 60 sind neben den Nutensätzen 24 ferner erste Sacknuten 62 und zweite Sacknuten 64 vorgesehen, die nicht mit dem Nutensätzen 24 verbunden sind. Die ersten Sacknuten 62 sind in den Reibbelagsegmenten 14 vorgesehen und erstrecken sich von einer ersten randseitigen Öffnung 66 an dem Innenrand 20 zu einem ersten Endpunkt 68 zwischen dem Innenrand 20 und dem Außenrand 22 der Reibfläche 18 (Fig. 7). Die zweiten Sacknuten 64 sind in den Reibbelagsegmenten 16 vorgesehen und erstrecken sich von einer zweiten randseitigen Öffnung 70 an dem Außenrand 22 zu einem zweiten Endpunkt 72 zwischen dem Außenrand 22 und dem Innenrand 20 der Reibfläche 18 (Fig. 7).

Die erste randseitige Öffnung 66 ist in der einen Umfangsrichtung 28 unmittelbar benachbart zu der Eintrittsöffnung 36 eines Nutensatzes 24 (in Fig. 7 nicht zu sehen) und in der anderen Umfangsrichtung 30 unmittelbar benachbart zu der Eintrittsöffnung 36 eines anderen Nutensatzes 24 (in Fig. 7 zu sehen) angeordnet. Die zweite Sacknut 64 ist in Umfangsrichtung 28 bzw. 30 zwischen der zweiten Nut 40 und der dritten Nut 42 bzw. zwischen der dritten Nut 42 und der zweiten Nut 40 angeordnet, wobei es sich bei den beiden Nuten 40, 42 um die zweite und dritte Nut 40, 42 desselben Nutensatzes 24 handelt. So ist die zweite randseitige Öffnung 70 der zweiten Sacknut 64 in der einen Umfangsrichtung 28 unmittelbar benachbart zu der Austrittsöffnung 44 der zweiten Nut 40 und in der anderen Umfangsrichtung 30 unmittelbar benachbart zu der Austrittsöffnung 46 der dritten Nut 42 angeordnet.

### Bezugszeichenliste

- 2: Reibteil
- 4: Reibbelagträger
- 6: innerer Rand des Reibbelagträgers
- 8: äußerer Rand des Reibbelagträgers
- 10: Zähne
- 12: Reibbelag
- 14, 16: Reibbelagsegmente
- 18: Reibfläche
- 20: Innenrand der Reibfläche
- 22: Außenrand der Reibfläche
- 24: Nutensatz
- 26: Drehachse des Reibteils
- 28: eine Umfangsrichtung
- 30: andere/entgegengesetzte Umfangsrichtung
- 32: erste Nut
- 34: Verzweigungspunkt
- 36: Eintrittsöffnung
- 38: Radiale durch den Verzweigungspunkt
- 40: zweite Nut
- 42: dritte Nut
- 44, 46: Austrittsöffnungen
- 48, 52, 54, 56: abgerundete Ecken
- 50: abgerundete Ecke
- 58: Kanten
- 60: Reibteil
- 62: erste Sacknuten
- 64: zweite Sacknuten
- 66: erste randseitige Öffnung
- 68: erster Endpunkt
- 70: zweite randseitige Öffnung
- 72: zweiter Endpunkt
- bₓ, b₁, b₂, b₃: Nutbreiten
- t: Nuttiefe
- α: Neigungswinkel der zweiten Nut
- β: Neigungswinkel der dritten Nut
- γ: Verzweigungswinkel

## Patentansprüche

1. Reibteil (2, 60) für eine reibschlüssig arbeitende Einrichtung mit einer ringförmigen Reibfläche (18), die einen Innenrand (20) und einen Außenrand (22) aufweist, wobei in der Reibfläche (18) mindestens ein Nutensatz (24) mit einer ersten Nut (32), die sich von dem Innenrand (20) oder dem Außenrand (22) zu einem Verzweigungspunkt (34) zwischen dem Innenrand (20) und dem Außenrand (22) erstreckt, und einer zweiten und dritten Nut (40, 42), die sich jeweils von dem Verzweigungspunkt (34) zu dem anderen Rand (22, 20) erstrecken, vorgesehen ist, wobei die zweite Nut (40) in die eine Umfangsrichtung (28) und die dritte Nut (42) in die andere Umfangsrichtung (30) der Reibfläche (18) gegenüber einer Radialen (38) durch den Verzweigungspunkt (34) geneigt ist, **dadurch gekennzeichnet, dass** der kleinste Nutquerschnitt der ersten Nut (32) größer als der größte Nutquerschnitt der zweiten Nut (40) und größer als der größte Nutquerschnitt der dritten Nut (42) ist.

2. Reibteil nach Anspruch 1, **dadurch gekennzeichnet, dass** sich die erste Nut (32) von dem Innenrand (20) zu dem Verzweigungspunkt (34) erstreckt.

3. Reibteil nach einem der Ansprüche 1 oder 2, **dadurch gekennzeichnet, dass** der Nutensatz (24) Y-förmig ausgebildet ist.

4. Reibteil nach Anspruch 3, **dadurch gekennzeichnet, dass** der Y-förmige Nutensatz (24) lediglich drei randseitige Öffnungen aufweist.

5. Reibteil nach einem der Ansprüche 3 oder 4, **dadurch gekennzeichnet, dass** der Nutensatz (24) ausschließlich Y-förmig ausgebildet ist.

6. Reibteil nach Anspruch 5, **dadurch gekennzeichnet, dass** der Nutensatz (24) ausschließlich aus der ersten, zweiten und dritten Nut (32, 40, 42) besteht.

7. Reibteil nach einem der Ansprüche 5 oder 6, **dadurch gekennzeichnet, dass** die erste, zweite und dritte Nut (32, 40, 42) in dem Verzweigungspunkt (34) endend zusammengeführt sind.

8. Reibteil nach einem der vorangehenden Ansprüche, **dadurch gekennzeichnet, dass** sich die erste Nut (32), vorzugsweise geradlinig, entlang der Radialen (38) erstreckt.

9. Reibteil nach einem der vorangehenden Ansprüche, **dadurch gekennzeichnet, dass** zwischen der zweiten und dritten Nut (40, 42) ein Verzweigungswinkel (γ) kleiner als 180° ausgebildet ist.

10. Reibteil nach Anspruch 9, **dadurch gekennzeichnet, dass** der Verzweigungswinkel (γ) zwischen 76° und 86°, vorzugsweise 81°, beträgt.

11. Reibteil nach einem der vorangehenden Ansprüche, **dadurch gekennzeichnet, dass** der Neigungswinkel (α) der zweiten Nut (40) gegenüber der Radialen (38) dem Neigungswinkel (β) der dritten Nut (42) gegenüber der Radialen (38) entspricht.

12. Reibteil nach einem der vorangehenden Ansprüche, **dadurch gekennzeichnet, dass** die zweite Nut (40) und die dritte Nut (42) jeweils eine Austrittsöffnung (44; 46) aufweisen.

13. Reibteil nach Anspruch 12, **dadurch gekennzeichnet, dass** die eine Austrittsöffnung (44) in der einen Umfangsrichtung (28) und die andere Austrittsöffnung (46) in der anderen Umfangsrichtung (30) vor der Radialen (38) angeordnet ist.

14. Reibteil nach einem der vorangehenden Ansprüche, **dadurch gekennzeichnet, dass** die erste Nut (32) eine Eintrittsöffnung (36) aufweist.

15. Reibteil nach einem der vorangehenden Ansprüche, **dadurch gekennzeichnet, dass** der Nutquerschnitt der zweiten und dritten Nut (40, 42) in Richtung der Austrittsöffnung (44, 46) konstant ist.

16. Reibteil nach einem der Ansprüche 1-14, **dadurch gekennzeichnet, dass** der Nutquerschnitt der zweiten und dritten Nut (40, 42) in Richtung der Austrittsöffnung (44, 46) vergrößert ist.

17. Reibteil nach Anspruch 16, **dadurch gekennzeichnet, dass** der Nutquerschnitt kontinuierlich vergrößert ist.

18. Reibteil nach einem der Ansprüche 16 oder 17, **dadurch gekennzeichnet, dass** der Nutquerschnitt der zweiten und dritten Nut (40, 42) an der Austrittsöffnung (44, 46) am größten ist.

19. Reibteil nach einem der vorangehenden Ansprüche, **dadurch gekennzeichnet, dass** eine Veränderung des Nutquerschnitts der Nuten (32, 40, 42) in Erstreckungsrichtung ausschließlich durch eine Veränderung der Nutbreite (bₓ) in Erstreckungsrichtung bewirkt ist.

20. Reibteil nach einem der vorangehenden Ansprüche, **dadurch gekennzeichnet, dass** der Nutensatz (24) bezogen auf die Radiale (38) symmetrisch ausgebildet ist.

21. Reibteil nach einem der vorangehenden Ansprüche, **dadurch gekennzeichnet, dass** das Reibteil (2) einen Belagträger (4) und einen an dem Belagträger (4) angeordneten Reibbelag (12), vorzugsweise einen Papierreibbelag, zur Ausbildung der Reibfläche (18) aufweist.

22. Reibteil nach Anspruch 21, **dadurch gekennzeichnet, dass** der Reibbelag (12) mehrere Reibbelagsegmente (14, 16) umfasst, die derart an dem Reibbelagträger (4) angeordnet sind, dass die Nuten (32, 40, 42) zwischen den Reibbelagsegmenten (14, 16) ausgebildet sind.

23. Reibteil nach Anspruch 22, **dadurch gekennzeichnet, dass** die dem Verzweigungspunkt (34) zugewandten Ecken (48, 50) der Reibbelagsegmente (14, 16) abgerundet sind.

24. Reibteil nach einem der Ansprüche 22 oder 23, **dadurch gekennzeichnet, dass** die den Eintritts- und/oder Austrittsöffnungen (36; 44, 46) zugewandten Ecken (52; 54, 56) der Reibbelagsegmente (14, 16) abgerundet sind.

25. Reibteil nach einem der vorangehenden Ansprüche, **dadurch gekennzeichnet, dass** das Reibteil (2, 60) eine Lamelle für eine Lamellenkupplung oder eine Lamellenbremse ist.

26. Reibteil nach einem der vorangehenden Ansprüche, **dadurch gekennzeichnet, dass** in der Reibfläche (18) ferner mindestens eine Sacknut (62, 64) vorgesehen ist, die sich von dem Innenrand (20) oder dem Außenrand (22) zu einem Endpunkt (68, 72) zwischen dem Innenrand (20) und dem Außenrand (22) erstreckt.

27. Reibteil nach Anspruch 26, **dadurch gekennzeichnet, dass** die Sacknut (64) eine randseitige Öffnung (70) aufweist, die in der einen Umfangsrichtung (28) unmittelbar benachbart zu der einen Austrittsöffnung (44) und in der anderen Umfangsrichtung (30) unmittelbar benachbart zu der anderen Austrittsöffnung (46) angeordnet ist.

28. Reibteil nach einem der Ansprüche 26 oder 27, **dadurch gekennzeichnet, dass** die Sacknut (64) in Umfangsrichtung (28, 30) zwischen der zweiten und dritten Nut (40, 42) desselben Nutensatzes (24) angeordnet ist.

29. Reibschlüssig arbeitende Einrichtung für ein Kraftfahrzeug, vorzugsweise eine Kupplung, eine Bremse oder eine Synchronisierungseinrichtung, mit mindestens einem Reibteil (2) nach einem der vorangehenden Ansprüche.

30. Reibschlüssig arbeitende Einrichtung nach Anspruch 29, **dadurch gekennzeichnet, dass** die Kupplung eine Nass- und/oder Lamellenkupplung oder die Bremse eine Lamellenbremse ist.

## Claims

1. Friction part (2, 60) for a frictionally operating device having an annular friction face (18) which has an inner edge (20) and an outer edge (22), at least one set of grooves (24) being provided in the friction face (18) with a first groove (32) which extends from the inner edge (20) or the outer edge (22) to a branching point (34) between the inner edge (20) and the outer edge (22) and with a second and third groove (40, 42) which extend in each case from the branching point (34) to the other edge (22, 20), the second groove (40) being inclined in one circumferential direction (28) and the third groove (42) being inclined in the other circumferential direction (30) of the friction face (18) with respect to a radial line (38) through the branching point (34), **characterized in that** the smallest groove cross section of the first groove (32) is larger than the largest groove cross section of the second groove (40) and is larger than the largest groove cross section of the third groove (42).

2. Friction part according to Claim 1, **characterized in that** the first groove (32) extends from the inner edge (20) to the branching point (34).

3. Friction part according to either of Claims 1 and 2, **characterized in that** the set of grooves (24) is of Y-shaped configuration.

4. Friction part according to Claim 3, **characterized in that** the Y-shaped set of grooves (24) has merely three edge-side openings.

5. Friction part according to either of Claims 3 and 4, **characterized in that** the set of grooves (24) is of exclusively Y-shaped configuration.

6. Friction part according to Claim 5, **characterized in that** the set of grooves (24) comprises exclusively the first, second and third grooves (32, 40, 42).

7. Friction part according to either of Claims 5 and 6, **characterized in that** the first, second and third grooves (32, 40, 42) are merged such that they end at the branching point (34).

8. Friction part according to one of the preceding claims, **characterized in that** the first groove (32) extends along the radial line (38), preferably rectilinearly.

9. Friction part according to one of the preceding claims, **characterized in that** a branching angle (γ) of less than 180° is formed between the second and third groove (40, 42).

10. Friction part according to Claim 9, **characterized in that** the branching angle (γ) is between 76° and 86°, preferably 81°.

11. Friction part according to one of the preceding claims, **characterized in that** the inclination angle (α) of the second groove (40) with respect to the radial line (38) corresponds to the inclination angle (β) of the third groove (42) with respect to the radial line (38).

12. Friction part according to one of the preceding claims, **characterized in that** the second groove (40) and the third groove (42) have in each case one outlet opening (44; 46).

13. Friction part according to Claim 12, **characterized in that** one outlet opening (44) is arranged in one circumferential direction (28) and the other outlet opening (46) is arranged in front of the radial line (38) in the other circumferential direction (30).

14. Friction part according to one of the preceding claims, **characterized in that** the first groove (32) has an inlet opening (36).

15. Friction part according to one of the preceding claims, **characterized in that** the groove cross section of the second and third grooves (40, 42) is constant in the direction of the outlet opening (44, 46).

16. Friction part according to Claims 1 to 14, **characterized in that** the groove cross section of the second and third grooves (40, 42) is enlarged in the direction of the outlet opening (44, 46).

17. Friction part according to Claim 16, **characterized in that** the groove cross section is enlarged continuously.

18. Friction part according to either of Claims 16 and 17, **characterized in that** the groove cross section of the second and third grooves (40, 42) is largest at the outlet opening (44, 46).

19. Friction part according to one of the preceding claims, **characterized in that** a change in the groove cross section of the grooves (32, 40, 42) in the direction of extent is effected exclusively by a change in the groove width (bₓ) in the direction of extent.

20. Friction part according to one of the preceding claims, **characterized in that** the set of grooves (24) is of symmetrical configuration in relation to the radial line (38).

21. Friction part according to one of the preceding claims, **characterized in that** the friction part (2) has a lining carrier (4) and a friction lining (12), preferably a paper friction lining, which is arranged on the lining carrier (4) in order to form the friction face (18).

22. Friction part according to Claim 21, **characterized in that** the friction lining (12) comprises a plurality of friction-lining segments (14, 16) which are arranged on the friction-lining carrier (4) in such a way that the grooves (32, 40, 42) are formed between the friction-lining segments (14, 16).

23. Friction part according to Claim 22, **characterized in that** those corners (48, 50) of the friction-lining segments (14, 16) which face the branching point (34) are rounded.

24. Friction part according to either of Claims 22 and 23, **characterized in that** those corners (52; 54, 56) of the friction-lining segments (14, 16) which face the inlet and/or outlet openings (36; 44, 46) are rounded.

25. Friction part according to one of the preceding claims, **characterized in that** the friction part (2, 60) is a plate for a multi-plate clutch or a multi-plate brake.

26. Friction part according to one of the preceding claims, **characterized in that**, furthermore, at least one blind groove (62, 64) is provided in the friction face (18), which at least one blind groove (62, 64) extends from the inner edge (20) or the outer edge (22) to an end point (68, 72) between the inner edge (20) and the outer edge (22).

27. Friction part according to Claim 26, **characterized in that** the blind groove (64) has an edge-side opening (70) which is arranged in one circumferential direction (28) immediately adjacently to one outlet opening (44) and in the other circumferential direction (30) immediately adjacently to the other outlet opening (46).

28. Friction part according to either of Claims 26 and 27, **characterized in that** the blind groove (64) is arranged in the circumferential direction (28, 30) between the second and third grooves (40, 42) of the same set of grooves (24).

29. Frictionally operating device for a motor vehicle, preferably a clutch, a brake or a synchronizing device, having at least one friction part (2) according to one of the preceding claims.

30. Frictionally operating device according to Claim 29, **characterized in that** the clutch is a wet-running and/or multi-plate clutch or the brake is a multi-plate brake.

## Revendications

1. Élément de friction (2, 60) pour un dispositif fonctionnant par engagement par friction, comportant une surface de friction annulaire (18) qui comprend un bord intérieur (20) et un bord extérieur (22), au moins un ensemble de rainures (24) étant prévu dans la surface de friction (18), lequel ensemble de rainures comprend une première rainure (32) qui s'étend à partir du bord intérieur (20) ou du bord extérieur (22) jusqu'à un point d'embranchement (34) entre le bord intérieur (20) et le bord extérieur (22), et une deuxième et une troisième rainure (40, 42) qui s'étendent respectivement à partir du point d'embranchement (34) jusqu'à l'autre bord (22, 20), la deuxième rainure (40) étant inclinée dans l'un des sens périphériques (28) et la troisième rainure (42) étant inclinée dans l'autre sens périphérique (30) de la surface de friction (18) par rapport à une radiale (38) à travers le point d'embranchement (34), **caractérisé en ce que** la plus petite section transversale de rainure de la première rainure (32) est supérieure à la plus grande section transversale de rainure de la deuxième rainure (40) et est supérieure à la plus grande section transversale de rainure de la troisième rainure (42).

2. Élément de friction selon la revendication 1, **caractérisé en ce que** la première rainure (32) s'étend à partir du bord intérieur (20) jusqu'au point d'embranchement (34).

3. Élément de friction selon la revendication 1 ou 2, **caractérisé en ce que** l'ensemble de rainures (24) est réalisé en forme de Y.

4. Élément de friction selon la revendication 3, **caractérisé en ce que** l'ensemble de rainures (24) en forme de Y ne comprend que trois ouvertures du côté des bords.

5. Élément de friction selon la revendication 3 ou 4, **caractérisé en ce que** l'ensemble de rainures (24) est réalisé exclusivement en forme de Y.

6. Élément de friction selon la revendication 5, **caractérisé en ce que** l'ensemble de rainures (24) est constitué exclusivement de la première, de la deuxième et de la troisième rainure (32, 40, 42).

7. Élément de friction selon la revendication 5 ou 6, **caractérisé en ce que** la première, la deuxième et la troisième rainure (32, 40, 42) convergent en se terminant au point d'embranchement (34).

8. Élément de friction selon l'une quelconque des revendications précédentes, **caractérisé en ce que** la première rainure (32) s'étend, de préférence de manière rectiligne, le long de la radiale (38).

9. Élément de friction selon l'une quelconque des revendications précédentes, **caractérisé en ce qu'**entre la deuxième et la troisième rainure (40, 42) est réalisé un angle d'embranchement (γ) inférieur à 180°.

10. Élément de friction selon la revendication 9, **caractérisé en ce que** l'angle d'embranchement (γ) vaut entre 76° et 86°, de préférence 81°.

11. Élément de friction selon l'une quelconque des revendications précédentes, **caractérisé en ce que** l'angle d'inclinaison (α) de la deuxième rainure (40) par rapport à la radiale (38) correspond à l'angle d'inclinaison (β) de la troisième rainure (42) par rapport à la radiale (38).

12. Élément de friction selon l'une quelconque des revendications précédentes, **caractérisé en ce que** la deuxième rainure (40) et la troisième rainure (42) présentent respectivement une ouverture de sortie (44 ; 46).

13. Élément de friction selon la revendication 12, **caractérisé en ce que** l'une des ouvertures de sortie (44) est disposée devant la radiale (38) dans l'un des sens périphériques (28) et l'autre ouverture de sortie (46) est disposée devant la radiale (38) dans l'autre sens périphérique (30).

14. Élément de friction selon l'une quelconque des revendications précédentes, **caractérisé en ce que** la première rainure (32) présente une ouverture d'entrée (36).

15. Élément de friction selon l'une quelconque des revendications précédentes, **caractérisé en ce que** la section transversale de rainure de la deuxième et de la troisième rainure (40, 42) est constante dans la direction de l'ouverture de sortie (44, 46).

16. Élément de friction selon l'une quelconque des revendications 1 à 14, **caractérisé en ce que** la section transversale de rainure de la deuxième et de la troisième rainure (40, 42) augmente dans la direction de l'ouverture de sortie (44, 46).

17. Élément de friction selon la revendication 16, **caractérisé en ce que** la section transversale de rainure augmente en continu.

18. Élément de friction selon la revendication 16 ou 17, **caractérisé en ce que** la section transversale de rainure de la deuxième et de la troisième rainure (40, 42) est la plus grande au niveau de l'ouverture de sortie (44, 46).

19. Élément de friction selon l'une quelconque des revendications précédentes, **caractérisé en ce qu'**une variation de la section transversale de rainure des rainures (32, 40, 42) dans la direction d'étendue est réalisée exclusivement par une variation de la largeur de rainure (bₓ) dans la direction d'étendue.

20. Élément de friction selon l'une quelconque des revendications précédentes, **caractérisé en ce que** l'ensemble de rainures (24) est réalisé de manière symétrique par rapport à la radiale (38).

21. Élément de friction selon l'une quelconque des revendications précédentes, **caractérisé en ce que** l'élément de friction (2) comprend un support de garniture (4) et une garniture de friction (12) disposée sur le support de garniture (4), de préférence une garniture de friction en papier, pour former la surface de friction (18).

22. Élément de friction selon la revendication 21, **caractérisé en ce que** la garniture de friction (12) comporte plusieurs segments de garniture de friction (14, 16) qui sont disposés sur le support de garniture de friction (4) de telle sorte que les rainures (32, 40, 42) soient réalisées entre les segments de garniture de friction (14, 16).

23. Élément de friction selon la revendication 22, **caractérisé en ce que** les coins (48, 50) des segments de garniture de friction (14, 16) tournés vers le point d'embranchement (34) sont arrondis.

24. Élément de friction selon la revendication 22 ou 23, **caractérisé en ce que** les coins (52 ; 54, 56) des segments de garniture de friction (14, 16) tournés vers les ouvertures d'entrée et/ou de sortie (36 ; 44, 46) sont arrondis.

25. Élément de friction selon l'une quelconque des revendications précédentes, **caractérisé en ce que** l'élément de friction (2, 60) est un disque pour un embrayage à disques multiples ou un frein à disques multiples.

26. Élément de friction selon l'une quelconque des revendications précédentes, **caractérisé en ce que** dans la surface de friction (18) est en outre prévue au moins une rainure borgne (62, 64) qui s'étend à partir du bord intérieur (20) ou du bord extérieur (22) jusqu'à un point d'extrémité (68, 72) entre le bord intérieur (20) et le bord extérieur (22).

27. Élément de friction selon la revendication 26, **caractérisé en ce que** la rainure borgne (64) comprend une ouverture du côté du bord (70) qui est disposée, dans l'un des sens périphériques (28), à proximité immédiate de l'une des ouvertures de sortie (44) et, dans l'autre sens périphérique (30), à proximité immédiate de l'autre ouverture de sortie (46).

28. Élément de friction selon la revendication 26 ou 27, **caractérisé en ce que** la rainure borgne (64) est disposée entre la deuxième et la troisième rainure (40, 42) du même ensemble de rainures (24) dans le sens périphérique (28, 30).

29. Dispositif fonctionnant par engagement par friction pour un véhicule automobile, de préférence un embrayage, un frein ou un dispositif de synchronisation, comprenant au moins un élément de friction (2) selon l'une quelconque des revendications précédentes.

30. Dispositif fonctionnant par engagement par friction selon la revendication 29, **caractérisé en ce que** l'embrayage est un embrayage humide et/ou à disques multiples ou **en ce que** le frein est un frein à disques multiples.
